# EUROPEAN PATENT SPECIFICATION

(11) **EP 2 219 396 B1**
(45) Date of publication and mention of the grant of the patent: **13.04.2016**
(21) Application number: 09152669.9
(22) Date of filing: 12.02.2009
(51) Int. Cl.: H04W 4/02

(54) **Enhanced application of operational information**
Erweiterte Anwendung von Betriebsinformationen
Application améliorée d'informations opérationnelles

(43) Date of publication of application: 18.08.2010
(73) Proprietor: Airbus Defence and Space Oy, 00380 Helsinki (FI)
(72) Inventor: Raunio, Antti, 40630, Jyväskylä (FI); Klemettinen, Vesa, 40950, Muurame (FI)
(74) Representative: Kolster Oy Ab

(56) References cited:
- WO-A-2007/114842
- US-A1- 2005 153 687
- "Terrestrial Trunked Radio (TETRA); Release 2; Designer's Guide; TETRA High-Speed Data (HSD); TETRA Enhanced Data Service (TEDS); ETSI TR 102 580" ETSI STANDARDS, LIS, SOPHIA ANTIPOLIS CEDEX, FRANCE, vol. TETRA-4, no. V1.1.1, 1 October 2007 (2007-10-01), XP014039712 ISSN: 0000-0001
- "Terrestrial Trunked Radio (TETRA); Voice plus Data (V+D) and Direct Mode Operation (DMO); Part 18: Air interface optimized applications; Sub-part 1: Location Information Protocol (LIP); ETSI TS 100 392-18-1" ETSI STANDARDS, LIS, SOPHIA ANTIPOLIS CEDEX, FRANCE, vol. TETRA-3, no. V1.3.1, 1 April 2007 (2007-04-01), XP014037550 ISSN: 0000-0001
- MENTURA GROUP LTD: "MENTURA TETRA TRACKER"[Online] December 2006 (2006-12), pages 1-2, XP002537779 Retrieved from the Internet: URL:http://www.menturagroup.com/pdf/MENTUR A_Tracker_01.pdf> [retrieved on 2009-07-20]

## Description

### FIELD OF THE INVENTION

The present invention relates to telecommunications and specifically to application of operational information in telecommunications systems.

### BACKGROUND ART

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

Operational information on, for example, terminal user's availability, location, or status is conventionally conveyed to other users via an intermediate node, for example, a presence server or a dispatcher application. A first user updates his operational information according to predefined scheme to the intermediate node and a second user retrieves the information from the node. The updates are typically delivered over a traffic channel or transmitted as a short data message over a signaling channel.

For example, a user terminal may comprise an automatic vehicle location element that at intervals determines the location of the user terminal and transmits the coordinates in a short message to a control room system operated by the dispatcher of the organization. The dispatcher may then monitor location of one or more users simultaneously and use the locations to manage operations in an optimal way. For other users this type of information is typically available indirectly; for example, the second user may inquire location information of the first user verbally from the dispatcher, or download it from the location application server. Basically the reason for this is in the management of radio resources: use of short messages in many situations adds load to the air interface, and especially to the common control channel. This is highly undesirable, and often the reason why applications for monitoring the locations of other users are very rare in user terminals.

On the other hand, in packet-based systems the first user may update, for example, his availability for operations to a presence server. From there the presence information may be distributed to a number of other users that have subscribed to the first user's presence information.

In both these examples, the intermediate node collects the operational information from a number of sources over the air interface and makes it available to a plurality of other users. Both in the updates to the node and in the outputs by the node, at least the identity of the transmitting or receiving user need to be conveyed included in the update messages.

WO 2007/114842 discloses a solution in which a processor in a wireless communication device detects a defined operational event and at that time also determines its location. The location information is then used in the device, e.g. by generating a map and visually displaying the location to the user. In some embodiments the wireless communication device sends its location to one or more remote wireless communication devices using a SIP message.

### SUMMARY

An object of the present invention is thus to provide a method and an apparatus to improve application of operational information in user terminals. The object of the invention is achieved by a method, a user terminal, a communications system and a computer program product, which are characterized by what is stated in the independent claims. The preferred embodiments of the invention are disclosed in the dependent claims.

The invention is based on delivering dynamically varying operational information from the first user terminal to a second user terminal in a user plane signalling message in a timeslot stolen from a traffic channel allocated to a connection between the first user terminal and the second user terminal.

An advantage of the invention is that delivery of operational information between users is facilitated without essentially incurring additional load to the radio interface between the user terminals. The amount of overhead, for example header and identity data, is essentially smaller than in conventional delivery of operational information. Further advantages of the invention are discussed in more detail with the description of exemplary embodiments.

### BRIEF DESCRIPTION OF THE DRAWINGS

In the following, embodiments will be described in greater detail with reference to accompanying drawings, in which
Figure 1 shows basic elements of a TETRA communication system;
Figure 2 illustrates an exemplary hardware configuration for an embodied user terminal apparatus;
Figure 3 shows a frame structure in the TETRA system;
Figures 4 and 5 are simplified diagrams illustrating uplink and downlink bursts in the TETRA system;
Figure 6 illustrates layers 2 and 3 and service access points to the layers above them;
Figure 7 illustrates an exemplary application protocol data unit;
Figures 8A and 8B show exemplary displays in the screen of the user terminal;.
Figure 9 illustrates an exemplary embodiment of a method according to the invention
Figure 10 illustrates another exemplary embodiment of a method according to the invention.

### DETAILED DESCRIPTION OF SOME EMBODIMENTS

It is appreciated that the following embodiments are exemplary. Furthermore, although the specification may in various places refer to "an", "one", or "some" embodiment(s), reference is not necessarily made to the same embodiment(s), or the feature in question does not only apply to a single embodiment. Single features of different embodiments may be combined to provide further embodiments.

The present invention relates to a communication system that allows two user terminals to share operational information between each other. A variety of system configurations applying a variety of communication technologies may be used separately or in combinations to implement the embodiments of the invention. Communication systems and technologies evolve continuously, and embodiments of the invention may require a number of modifications that are basically obvious for a person skilled in the art. Therefore all words and expressions of this specification should be interpreted broadly, as they are intended merely to illustrate, not to restrict, the embodiments.

In the following the principles of the present invention are described by means of a communication system applying Terrestrial Trunked Radio (TETRA) technology. In the following, the invention is described using the terms and elements of the TETRA air interface as specified in the European Telecommunication Standards ETSI EN 300 392-2; European Standard (Telecommunications series); Terrestrial Trunked Radio (TETRA); Voice plus Data (V+D); Part 2: Air Interface (Al), and ETSI TR 102 580; Terrestrial Trunked Radio (TETRA); Release 2; Designer's Guide; TETRA High-Speed Data (HSD); TETRA Enhanced Data Service (TEDS), however, without limiting the invention to this one radio system technology. For a person skilled in the art it is clear that the invention may be applied to any communication technology that provides delivery of user plane signaling messages.

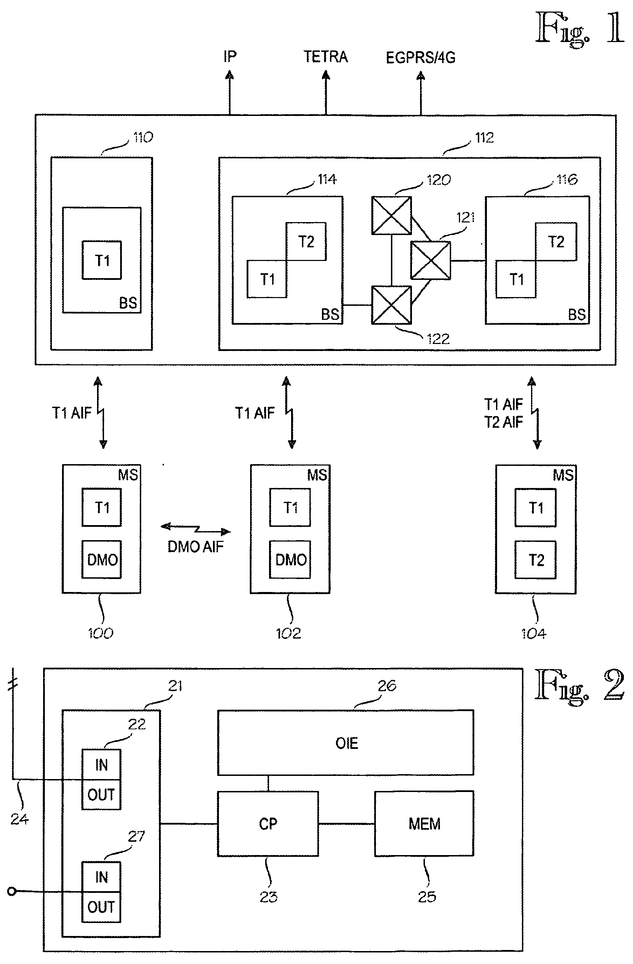

Figure 1 shows basic elements of a TETRA communication system. Mobile stations 100, 102, 104 applying the TETRA standard definitions may connect with a switching and management infrastructure (SwMI) and provide users with circuit mode calls and delivery of short data and Internet Protocol (IP) packet data. Packet data may be used by applications running directly within the mobile stations 100, 102, 104 or may be used by external data terminals (not shown) that may be connected with the mobile stations 100, 102, 104 via a Peripheral Equipment Interface (PEI) defined in TETRA standards. In the latter case PEI conveys packet data between an application and a connected mobile station.

TETRA technology, as such, is extensively documented and well known to a person skilled in the art. The European Telecommunications Standards Institute (ETSI) standard EN 300 392-2 V3.2.1 is the first version of a TETRA standard that incorporates a High-Speed Data (HSD) enhancement, generally referred to as "TEDS" or TETRA Enhanced Data Service. This incorporation has resulted in an enhanced air interface known as the TETRA Release 2 air interface. As a measure of integration, the access to the HSD channels is allowed via the TETRA Release 1 control channel only. Furthermore, the 4-slot TDMA access structure of the air interface plus its TDMA frames, slots and subslots are being preserved. The new HSD channels employ additional new modulations, channel coding and various coding rates.

Accordingly, Figure 1 shows the embodied system in form of an integrated TETRA network 10 that includes a conventional TETRA 1 infrastructure 110 and a conventional TETRA 1 plus high-speed data enhanced infrastructure 112. The conventional infrastructure 110 and the enhanced infrastructure 112 may be connected via inter-system interface (151) and Internet-work Packet Interface (IPI). Common routers 120, 121, 122 are depicted for TETRA Release 1 and high-speed data IP packet distribution within the enhanced infrastructure 112. The integrated TETRA network may comprise also conventional external interconnections to other TETRA networks (TETRA), external GPRS/3G networks (EGPRS/3G) or to an external IP packet data network (IP).

The invention relates to a mechanism implemented in the air interface of communications between two user terminals, at least one of which communicates over the air interface. Figure 2 illustrates an exemplary hardware configuration for an embodied wireless user terminal apparatus. It is noted that any type of user terminals may be applied without deviating from the scope of protection. For example, in TETRA systems, the various types of dispatcher workstations and platforms running dispatching applications are considered as user terminals.

The apparatus comprises a communication unit 21 with at least one input unit for inputting data to the internal processes of the apparatus and at least one output unit for outputting data from the internal processes of the apparatus. The communication unit typically comprises a radio transceiver unit 22, which includes a transmitter and a receiver, and is also electrically connected to a processing unit 23. The transmitter of the radio transceiver unit 22 receives a bitstream from the processing unit 23, and converts it to a radio signal for transmission by the antenna 24. Correspondingly, the radio signals received by the antenna 24 are led to the receiver of the radio transceiver unit 22, which converts the radio signal into a bitstream that is forwarded for further processing to the processing unit 23. The functions implemented by the processing unit 23 in transmission typically comprise encoding, reordering, interleaving, scrambling, channel multiplexing, and burst building. A communication unit the apparatus typically comprises also a user interface with a keypad, a touch screen, a microphone, or equals for inputting data from the user and a screen, a touch screen, a loudspeaker, or equals for outputting data to the user.

The communication unit 21 is electrically connected to a processing unit 23 for performing systematic execution of operations upon data. The processing unit 23 is a central element that essentially comprises an arithmetic logic unit, a number of special registers and control circuits. A memory unit 25, data medium where computer-readable data or programs, or user data can be stored, is typically integrated or connected to the processing unit 23. The memory unit 25 typically comprises volatile or non-volatile memory, for example EEPROM, ROM, PROM, RAM, DRAM, SRAM, firmware, programmable logic, etc.

The apparatus comprises also a operational information element 26 that is configured to determine a piece of operational information associated to the user terminal and create a data element indicating the determined operational information. Operational information refers in this context to one or more momentary values describing a dynamically varying characteristic associated to the user. The momentary values may be measured by the operational information element 26, or determined in the operational information element 26 on the basis of information input from a source interfaced to the operational information generation element 26.

The operational information is typically transferred in form of coordinates coded in a defined format. An example of operational information is geographical location, generated by a positioning element. The positioning element typically applies external radio signals to determine its present local position. The signals may be received via the radio transceiver unit 22. The radio transceiver unit may apply signals from the primary transmitter and receiver discussed above, or the radio transceiver unit 22 may comprise an additional receiver for receiving a further external signal for location purposes. An example of the positioning element is a global positioning system (GPS) device that may be integrated into the apparatus. Other types of operational information or positioning methods may be applied without deviating from the scope of protection.

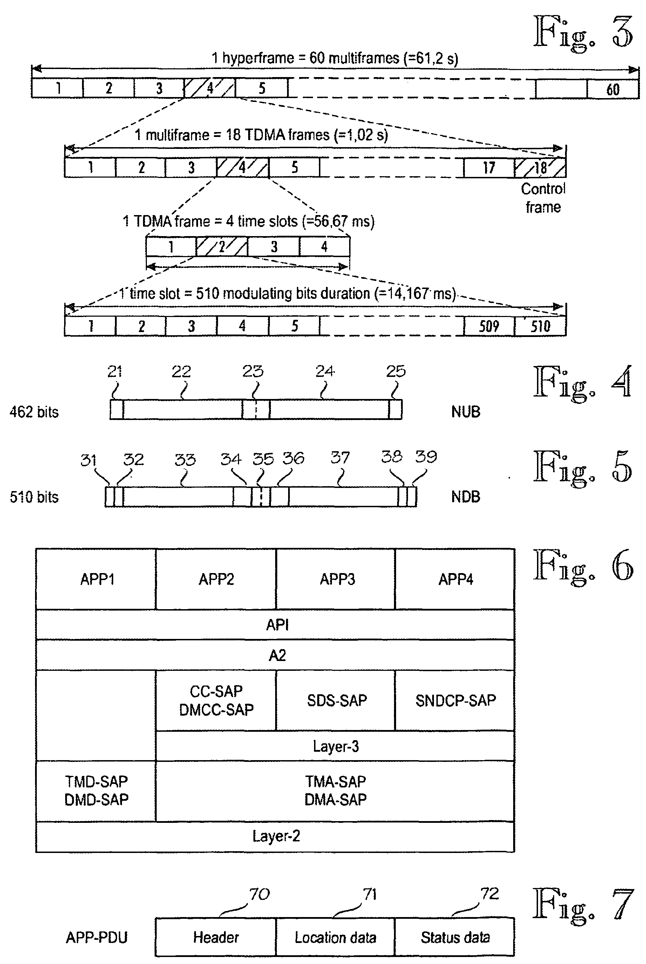

The processing unit 23, memory unit 25, communication unit 21 and operational information element 26 are electrically interconnected to provide means for performing systematic execution of operations on the received and/or stored data according to the predefined, essentially programmed processes of the user terminal. In solutions according to the invention, the operations comprise functions for controlling transmissions of operational information from one or more mobile stations within a base station cell. The operations are described in more detail with Figures 3 to 10.

The units and blocks of the apparatus may be implemented as one or more integrated circuits, such as application-specific integrated circuits (ASIC). Other hardware embodiments are also feasible, such as a circuit built of separate logic components. A hybrid of these different may also be applied. All modifications and configurations required for implementing functionality of an embodiment may be performed as routines, which may be implemented as added or updated software routines, application circuits (ASIC) and/or programmable circuits. Software routines may be downloaded into the apparatus.

It should be noted that only elements necessary for disclosing the present embodiment are illustrated in Figure 2. For a person skilled in the art it is clear that user terminals comprise a plurality of further elements and functionalities not explicitly illustrated herein. In addition, the blocks illustrate logical or functional units that may be implemented in or with one or more physical units, notwithstanding whether they are illustrated as one or more blocks in Figure 2.

The computer programs may be stored on a computer program distribution medium readable by a computer or a processor. The computer program medium may be, for example but not limited to, an electric, magnetic, optical, infrared or semiconductor system, device or transmission medium. The computer program medium may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and a computer readable compressed software package.

In a conventional location services a user terminal sends information indicating its latest location to the system. The location service processes this with good approximation to a geographical location of the user terminal, which can then be output to a user or input for other applications. In location solutions the location update of a user terminal may be requested by another device or the user terminal may send its location updates based on some predefined criteria automatically. In both of the modes the requesting device and the receiver of the location updates may be a mobile radio system, a map application or another radio terminal. In the first alternative the location report is typically requested from another device that sends a request to the user terminal which acknowledges the request by sending back its current location information. In the latter alternative a user terminal typically sends frequent location reports to the system according to predefined or configurable reporting settings based on time, distance, combined time and distance intervals, status, priority or velocity.

Applications where location information is freely exchanged between user terminals are relatively rare, because location information is typically transmitted in a short data message. Delivery of multiple messages from a plurality of user terminals generates additional load to the air interface and to the common control channels. Especially if the applied radio interface allows group messaging, the number of exchanged messages within the group of user-to-user applications would rapidly accumulate into significant figures and by congesting the common control channel could potentially disrupt the operations of the whole system.

In the embodied solution, this problem is avoided by exchanging location information in a traffic channel that is allocated for transmissions of user information between the user terminals, and temporarily stolen for signaling purposes. Due to this, one does not need additional procedures for accessing a radio resource for the transmission of the location information. Furthermore, since the channel is already allocated, the endpoints of the transmissions are known, and basically only the coordinates of the location information needs to be transmitted. The associated overhead required to deliver the location information is thus significantly reduced.

In digital radio systems a physical channel provides a link at the interface between a subscriber terminal and a network. A physical channel substantially comprises a frame part of a selected multiple access technique, the frame part being allocated to data transmission between a particular subscriber terminal and the network. A physical channel can therefore comprise, for instance, one or more TDMA frame time slots arranged at a specific frequency range, or frame parts separated by means of a CDMA frame code.

Physical channels are utilized by means of various multiplexing techniques whereby logical channels are created on a physical link. The term logical channel refers to a logical data transmission bus between two or more parties, the bus being mapped on an interface between a protocol and a radio system. A mobile communications system or a part thereof can therefore comprise different types of logical channels. Logical channels are typically divided into traffic channels (TCH), which comprise different kinds of traffic relaying channels, and control channels (CCH), which comprise e.g. broadcast control channels, common control channels and dedicated control channels. Speech and circuit-switched data are transferred over the radio interface substantially on traffic channels and signalling and packet data on control channels.

As a rule, a logical channel associated with a received signal can be concluded from the used multiplexing technique, but this does not always apply. A number of mobile communications systems allow signalling, for example, to be also transferred on traffic channels. A burst to be transmitted in the traffic channel then typically comprises information that indicates whether transmission of traffic data or signalling takes place. This procedure will be hereinafter referred to as stealing.

Figure 3 shows an exemplary frame structure, applied in TETRA system trunked mode communications. According to the ETSI specifications, the communication system employs in the air interface a basic TETRA four-slot TDMA. A hyperframe level defines the top-level frame hierarchy. One hyperframe 30 is subdivided into 60 multiframes 22, and one multiframe 32 is subdivided in 18 frames 34. The eighteenth frame in a multiframe is a control frame. One frame is subdivided into 4 time slots 36, and has duration of 170/3 ms ≈ 56,67 ms. For conventional phase modulation the timeslot 69 corresponds to 255 symbol duration, each one with a duration of 500/9 µs = 55,56 µs. For Quadrature Amplitude Modulation (QAM) applied in the high-speed data transmission the timeslot is divided into 34 modulation symbol duration, each one with a duration of 5/12 ms ≈ 416,7 µs. The uplink timeslots may be subdivided into two subslots 38, 39.

The TETRA high-speed air interface maintains this basic TETRA time-division multiple access (TDMA) structure using four timeslots per carrier. A pair of uplink and downlink timeslots associated to a pair of uplink and downlink radio frequencies forms a physical channel. The physical channel conveys traffic and signalling messages in the form of logical channels, the interface between the higher layer protocols and the high-speed data radio subsystem.

A burst is a sequence modulated by carrier data flow and it describes the physical contents of a time slot. In the TETRA system, eight different bursts are determined. In the following we shall examine a Normal Uplink Burst NUB, which a subscriber terminal uses for data transmission towards a base station; and a continuous Normal Downlink Burst NDB, which the base station uses for data transmission towards the subscriber terminal. Said bursts typically comprise a normal training sequence in the middle of the burst, with blocks that may comprise either traffic or control channel data on each side of the training sequence. Figures 4 and 5 are simplified diagrams illustrating uplink and downlink bursts in the TETRA system.

The uplink burst NUB comprises two four-bit tails 41, 45, which are used for equalisation purposes and for reducing filter transient responses at the beginning and end of the bursts. In the middle of the burst there is a normal 22-bit training sequence 43 which indicates whether the burst blocks comprise one or two logical channels. The training sequence also implicitly denotes whether the first burst block or both the blocks comprise signalling data instead of traffic data. Between the tails and the training sequences are left 216-bit data bit blocks 42 and 44.

The downlink burst NDB comprises a plural number of fields, but also this burst substantially comprises a normal training sequence 55 in the middle and, on each side of it blocks 53 and 57 that may, as mentioned, comprise traffic data or control data. In addition, the burst begins and ends with a third 22-bit training sequence 51 which is divided over the interface between two bursts so that there are 12 bits at the beginning and 10 bits at the end of a burst. The third training sequence 51 is followed by two phase control bits 52 after which comes a 216-bit data bit block 53 and 14 broadcast bits 54. The normal training sequence 55 is located in the middle of the burst and it is correspondingly followed by 16 broadcast bits 56, a 216-bit data bit block 57, phase control bits 58 and a third training sequence 59.

In the TETRA system two normal 22-bit training sequences differing from one another are defined. The training sequences are used for indicating whether the burst blocks comprise one or two logical channels, but also stealing from a traffic channel is indicated by using a training sequence. When a burst comprises a training sequence 1, stealing is interpreted not to be in use, and the burst comprises entirely traffic channel data. When a burst comprises training sequence 2, the time slot into which the burst is mapped is interpreted to be either totally or partly stolen for signalling purposes. The MAC (Medium Access Control) header in the first half slot indicates whether the second half slot is also stolen. This mechanism applies to both uplink and downlink transmissions.

When a user terminal establishes a connection to another endpoint, a traffic channel is allocated to the connection. For example, a TETRA user terminal initiates a transaction via random access protocol. After the initial access, a base station may reserve one or more slots that form a traffic channel allocated to particular user terminal for a particular connection. As long as the connection exists, the traffic channel is reserved to the user terminal and the user terminal may transmit and receive information in the timeslot(s) of the traffic channel without including the address of the other endpoint of the connection in the transmitted information.

Control plane (C-plane) typically refers to media traffic which carries signalling information. User information may herein be considered to refer to any other information than control plane messages, and media traffic carrying user information is thus referred to as U-plane. For example in TETRA, different traffic channels have been defined for speech or data applications and for different data message speeds. Also in the higher layers, different protocols are applied to C-plane and U-plane. Figure 6 illustrates the protocol stacks applied in TETRA systems for delivery of C-plane and U-plane messages. TETRA is widely documented and its protocols are thus generally known to a person skilled in the art. The description thus concentrates on the parts relevant for the embodied solution.

Figure 6 illustrates layers 2 and 3 and service access points (SAP) to the layers above them. In general, an element of the communication system implementing the protocol stack may comprise an application that has access to these service access points and via them access lower layer procedures of the communication system. In the protocol model of the present embodiment, a TETRA user terminal comprises a number of terminal applications APP1, APP2, APP3, APP4 that interface the application layer AL over one or more application programming interfaces (API). In the example fo Figure 6 it is assumed that all applications use the same interface API, however, various methods for interfacing the application layer may be applied without deviating from the scope of protection. For example, system applications provided by the manufacturer may apply a different API as terminal applications installed or downloaded to the user terminal at a later stage.

One of the conventional tasks of the application layer is to provide a serving function that manages the connections, and their associations to the terminal applications. Accordingly, the service function recognizes all applications APP1, APP2, APP3, APP4 in the user terminal, monitors the information received via the lower layer SAPs, and distributes the information coming from the lower layer SAPs to the applications APP1, APP2, APP3, APP4 and information coming from the applications APP1, APP2, APP3, APP4 to applicable lower layer SAPs. The service function may also transfer information between the applications APP1, APP2, APP3, APP4. It is noted that implementations of conventional AL service functions and application programming interfaces are widely applied and well known to a person skilled in the art.

In the embodied user terminal, the actual user traffic is transferred to the application layer from layer 2, and the signalling messages are transferred to the application layer from layer 3 via specific SAPs. In trunked mode transfer of user traffic the user terminal applies TMD-SAP and in direct mode transfer of user traffic DMD-SAP. Control plane messages arrive to the application layer via CC-SAP, DMCC-SAP, SDS-SAP, and SNDCP-SAP. In the following, communications applying TMD-SAP are described in more detail. However, the procedures for U-plane signalling of TMD-SAP and DMD-SAP correspond with each other, so the description applies to DMD-SAP and direct mode communications, as well.

The TMD-SAP may be used for the transfer of speech frames or circuit mode data, but also if the application APP steals from the traffic capacity to send C-plane signalling, or U-plane signalling. A U-plane signalling refers to user-to-user signalling, where a user data item is transmitted in a timeslot that is stolen from a channel allocated for the connection between the users. Layer 2 procedures are not aware of the intended purpose of the U-plane signalling. When transmitting a slot in traffic mode, the U-plane application APP feeds the half slots to layer 2 separately in a TMD-UNITDATA request primitive of TMD-SAP. The half slots of APP may comprise either U-plane traffic, or U-plane signalling. In the receiving side, for each half slot, the layer 2 shall issue to the U-plane application an TMD-UNITDATA indication primitive that contains any U-plane information (TCH or STCH) and indicates whether the half slot was stolen for C-plane signalling, stolen for U-plane signalling or not stolen.

In the present embodiment, an application APP1 is an integrated positioning element PE of the user terminal. APP1 generates coordinate data that indicates the present location of the user terminal and delivers it via AL to APP2. At defined intervals, APP2 is then configured to create a data item that includes information to indicates the location of the user terminal in a form applicable by another user terminal. The data item may be implemented, for example, as a defined application protocol data unit (APP-PDU), illustrated in Figure 7.

APP-PDU may comprise a header 70 that allows the service function of AL to determine that the message is associated to APP2. Header information may be additionally applied by APP2 to identify the type of information included in APP-PDU. In addition to that APP-PDU may comprise a field 71 that includes the actual operational information, here the location data, coded in a format used in the application. It is noted that APP-PDU does not need to include information for indicating the origin or destination of the location information. All this is available to the service function on the basis of the connection it associates with APP2. The serving function recognizes the channel from which the slot is to be stolen to the U-plane signalling. As for incoming operational information, the serving function identifies the channel from which the slot was stolen to the U-plane signalling, recognizes the connection and assoiates it with APP2.

As discussed above, location information is used here as one example of the variety of dynamically varying operational information, and a significant advantage may be achieved by use of this one type of operational information only. However, similar advantages may be achieved by distributing similarly other type of dynamic information. To illustrate this, in the present embodiment, APP-PDU comprises also a status data field 72 that conveys operational data indicating the current status of the user.

In conventional systems operative status information is available in dispatcher applications, to which each terminal sends status messages input by the user via the user interface. In many situations, availability of such information would be useful to the members of the fleets, as well. However, if all users would transmit their status information to several other users in conventional way, the air interface would very soon be blocked by the mass of status messages.

Accordingly APP2 is also connected to the user interface application APP3 of the user terminal and is able to receive from the user information that indicates his operational status of the user. The user may, for example, apply a pre-coded list of operational status indications, and input a code by typing it via the keypad of the user terminal.. By including this status indication in APP-PDU, the operational status may be made available to one or more other users, for example members in a communication group, without essentially adding the amount of load to the radio interface.

The amount of data required to indicate one location and pre-coded operational status is very small, so in most applications only one half slot needs to be stolen for the purpose. The operational information may be transmitted at any time after the channel allocation. Advantageously the location information is transmitted the first time very early after connection setup and after that in defined intervals so that the corresponding application in the receiving user terminal may appropriately update its information. Due to the efficient transmission mechanism that does not unnecessarily waste the radio resources; the interval may be relatively short. This allows accurate monitoring of the dynamically varying location of the mobile user terminal.

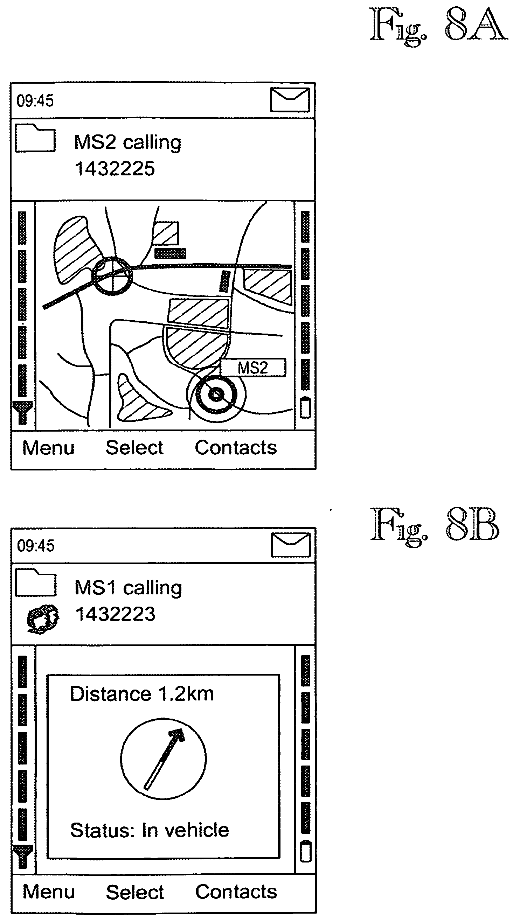

The advantages of the mechanism are achieved already in one-to-one communication, but are even more significant when applied in systems that allow group communication. For example, in the exemplary TETRA embodiment, U-plane signalling is available both in individual calls and in group calls. Figure 8 illustrates a situation where a fleet of three radio terminal users RT1, RT2 and RT3 form a fleet whose operations potentially complement each other, if managed interactively. Typically users that are involved in operational situations cannot spend much time tinkering with their terminals, so the operational information required for interactive management should preferably be processed automatically and locally in the terminals of the participating users RT1, RT2, RT3. In a conventional system any one of the three users would need to send short messages to the other two user terminals, which in most cases is impossible, because such operations would too much attention from the users. Furthermore, in a system with practically unlimited resources free of charge this amount of text messaging might be possible, but in any other environments such arrangement would be anyhow be most impractical.

In the present embodiment, the fleet of RT1, RT2 and RT3 may initiate a group call, after which each of the user terminals may transmit their operational information, for example, comprising the location information and the user's operational status indication, to the other user terminals in U-plane signaling message, as described above. The operational information may be delivered in the beginning of the call and at intervals during the group call. In case more than one type of information is delivered, the application may be adjusted to follow a different transmission regime for different types of information. For example, in the embodied case, operational status indication may not be that relevant at a later stage of the operation, or it may be likely that the user cannot input any information via the keyboard after being involved with the operation. On the other hand, updates on location information may be needed continuously throughout the operation. The application may, for example, be configured to send updates in location information at defined intervals and operational status indications in the beginning of the group call.

In the receiving end, the procedure runs similarly. The base station passes the U-plane signalling message towards the destination and the downlink MAC-U-SIGNAL PDU is substantially identical to that received from the transmitting station. Stealing is detected on the basis of the training sequence and the receiving user terminal identifies the received U-plane signalling on the basis of the TMD-UNITDATA request primitive of TMD-SAP. On the basis of the information in the header field of the APP-PDU, the serving function determines that it has received operational information, and forwards it to APP2 for further application.

The functions in advanced applications enable various uses to the dynamically varied data. One of the interesting embodiments relate to the location information. In most communications the information on locations of the communicating parties need to be known. Current location is an interesting fact that is typically exchanged between the communicating parties, even in most casual conversations. In operational activities, information on physical distance to the place of action and/or between the participating users is very important to any party involved with the situation. An advantageous way to apply location information is thus to combine it with a mass of other related information and display the combined information to the user via the user interface of the user terminal. For example, the location data of the user may be integrated with selected map information and shown in the display of the user terminal, as shown in Figure 8A. The exemplary display of Figure 8A shows the locations of the called user and the location of the caller. It is clear that in a group call, locations of all members of the group call could be displayed simultaneously in the screen.

Alternatively, the received location information may be integrated with one's own location information, and the relative distance to the other user may then be shown in the display of the user terminal, as shown in Figure 8B.

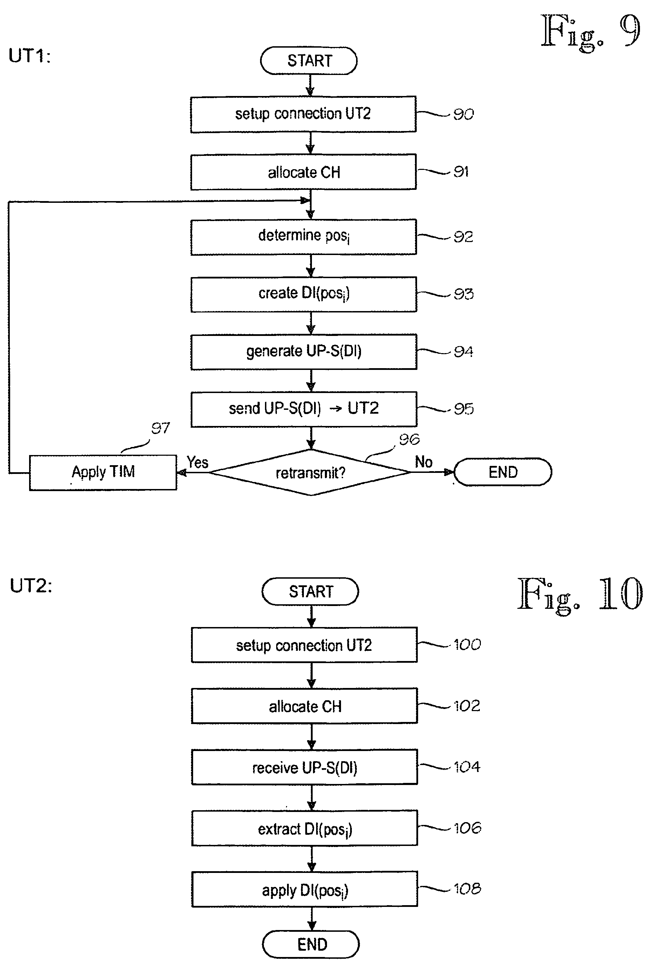

Figure 9 illustrates an exemplary embodiment of a method according to the invention. The method is presented in a user terminal UT1 that is operable in the embodied system of Figure 1 and is implemented as shown for the embodied apparatus, described with Figures 2 to 8. Parts of those descriptions may thus be referred from the disclosure of Figures 1 to 8, as well. For conciseness the procedure is described for individual call. In line with earlier embodiments, location information is used as an example representing the variety of different types of dynamically varying operational information. Based on the descriptions, implementation of the embodied method to other types of operational information and group calls is straightforward to any person skilled in the art.

The procedure in UT1 begins in a stage where the user terminal is switched on and operative for communications. At some point UT1 sets up (step 90) a connection to another user terminal UT2. At that time a traffic channel CH is allocated (step 91) to U1 for the duration of the connection. At a defined point, advantageously immediately after channel allocation, the positioning element in the user terminal determines (step 92) the content of the operational information, here the current location posᵢ of the user terminal and creates (step 93) a data item DI(posᵢ) that includes an indication on that position.

The user terminal generates (step 94) a U-plane signalling message UP-S(DI) that includes the created data item DI and sends (step 95) the U-plane signalling message via a timeslot stolen from CH to the other user terminal UT2. If (step 96) the user terminal is adjusted to transmit its operational information according to a retransmission scheme, it moves to apply (step 97) the scheme. The scheme may comprise, for example, use of a timer TIM that is reset after each transmission of operational information. When the count in the timer TIM exceeds a defined threshold, the procedure moves to step 92 where content of the operational information, e.g. the location information is determined. Otherwise the procedure ends and the user terminal returns to its normal operation.

Figure 10 illustrates another exemplary embodiment of a method according to the invention. The method is presented in a user terminal UT2 that is also operable in the embodied system of Figure 1 and is implemented according to the embodied apparatus, described with Figures 2 to 8. Also here details for the description may be referred from Figures 1 to 8.

The procedure in UT2 begins in a stage where the user terminal is switched on and operative for communications. At some point UT2 sets up (step 100 a connection to another user terminal UT1. At that time a traffic channel CH is allocated (step 102) to U2 for the duration of the connection. At some point, advantageously immediately after channel allocation, the user terminal UT2 receives (step 104) in a timeslot stolen from CH a U-plane signalling message UP-S(DI) that includes a data item DI. The user terminal extracts (step 106) the data item DI from the signalling message and applies (step 108) the information, here the location of UT1, as operational information of UT1.

It is clear that the methods of Figure 9 and Figure 10 apply to various types of operational information and to different retransmission schemes. By means of the described procedure, the dynamically varying information on user endpoints may be exchanged directly without causing unnecessary load to the radio interface and/or overhead in the exchanged messages.

The steps/points, signaling messages and related functions described above in Figures 9 and 10 are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point. The user terminal operations illustrate a procedure that may be implemented in one or more physical or logical entities. The signaling messages are only exemplary and may even comprise several separate messages for transmitting the same information. In addition, the messages may also contain other information.

It will be obvious to a person skilled in the art that, as technology advances, the inventive concept can be implemented in various ways. The invention and its embodiments are not limited to the examples described above but may vary within the scope of the claims.

## Claims

1. A method comprising:
allocating (91) a traffic channel for a connection between a user terminal and at least one other user terminal ;
determining (92) operational information on the user of the user terminal; **characterized by**
creating (93) a user plane signaling message of user-to-user signalling, said user plane signalling message including a data item carrying the derived operational information;
transmitting (95) the user plane signaling message to the at least the other user terminal in a timeslot stolen from the traffic channel allocated to the connection.

2. A method according to claim 1, **characterized by** the data item comprising location information indicating the location of the user terminal of the user, or operational status information typed in by the user of the user terminal.

3. A method according to claim 1 or 2, **characterized by** creating the user plane signaling message according to a predefined scheme.

4. A method according to claim 1, 2 or 3, **characterized by** the connection between the user terminal and the at least one other user terminal being a group call.

5. A method according to any of the preceding claims, **characterized by** the operational information comprising one or more values describing a dynamically varying characteristic associated to the user.

6. A method comprising:
allocating (102) a traffic channel for a connection between a user terminal and at least one other user terminal ;
receiving (104) a user plane signaling message of user-to-user signalling, wherein said user plane signalling message is received from the at least other user terminal in a timeslot stolen from the traffic channel allocated to the connection;
extracting (106) from the signaling message a data item, DI;
applying (108) information included in the data item as operational information on the other user terminal.

7. A method according to claim 6, **characterized by** the data item comprising location information indicating the location of the other user.

8. A method according to claim 6, **characterized by** the connection between the user terminal and the at least one other user terminal being a group call.

9. A method according to claim 7 or 8, **characterized by** displaying locations of one or more other users to the user of the user terminal.

10. A user terminal comprising
a communication unit (21) configured to allocate a traffic channel for the connection between the user terminal and at least one other user terminal;
an operational information element (26) configured to determine operational information on the user of the user terminal;
a processing unit (23) configured to create a user plane signaling message of user-to-user signalling, said user plane signalling message including a data item carrying the derived operational information, posᵢ;
the communication unit (21) being configured to transfer the signaling message to the at least other user terminal in a timeslot stolen from the traffic channel allocated to the connection.

11. A user terminal comprising
a communication unit configured to allocate a traffic channel for a connection between a user terminal and at least one other user terminal , and receive a user plane signaling message of user-to-user signalling, wherein said user plane signalling message is received from the at least other user terminal in a timeslot stolen from the traffic channel allocated to the connection;
a processing unit configured to extract from the signaling message a data item, DI, and apply information included in the data item as operational information on the other user terminal.

12. A user terminal according to claim 10 or 11 **characterized by** the operational information comprising one or more values describing a dynamically varying characteristic associated to the user.

13. A user terminal according to claim 10, 11 or 12, **characterized by** the user terminal comprising one or more applications, and an application layer service function for controlling associations between the applications and connections of the user terminal.

14. A communication system comprising a user terminal according to claim 10 and another user terminal according to claim 11.

15. A computer program comprising program code means adapted to perform steps of any of claim 1 to 9 when the program is run on a computer.

## Patentansprüche

1. Verfahren, aufweisend:
Zuordnen (91) eines Verkehrskanals zu einer Verbindung zwischen einer Benutzerstation und zumindest einer anderen Benutzerstation;
Bestimmen (92) von Betriebsinformationen über den Benutzer der Benutzerstation, **dadurch gekennzeichnet, dass**
eine Benutzerebene-Signalisierungsnachricht der Benutzer-zu-Benutzer-Signalisierung erstellt wird (93), wobei die besagte Benutzerebene-Signalisierungsnachricht ein Datenelement enthält, das die gewonnenen Betriebsinformationen trägt;
die Benutzerebene-Signalisierungsnachricht der zumindest anderen Benutzerstation in einem Zeitschlitz übertragen wird (95), der von dem zur Verbindung zugeordneten Verkehrskanal gestohlen ist.

2. Verfahren nach Patentanspruch 1, **dadurch gekennzeichnet, dass** das Datenelement Standortinformationen, die den Standort der Benutzerstation des Benutzers indizieren, oder Betriebszustandsinformationen, die von dem Benutzer der Benutzerstation eingegeben werden, aufweist.

3. Verfahren nach Patentanspruch 1 oder 2, dadurch **gekenn**z**eichnet**, dass die Benutzerebene-Signalisierungsnachricht nach einem vorbestimmten Schema erstellt wird.

4. Verfahren nach Patentanspruch 1, 2 oder 3, **dadurch gekennzeichnet, dass** die Verbindung zwischen der Benutzerstation und der zumindest einen anderen Benutzerstation ein Gruppenruf ist.

5. Verfahren nach einem der vorhergehenden Patentansprüche, **dadurch gekennzeichnet, dass** die Betriebsinformationen einen oder mehrere Werte aufweisen, die ein dynamisch variierendes, mit dem Benutzer verbundenes Merkmal beschreiben.

6. Verfahren, aufweisend:
Zuordnen (102) eines Verkehrskanals zu einer Verbindung zwischen einer Benutzerstation und zumindest einer anderen Benutzerstation;
Empfangen (104) einer Benutzerebene-Signalisierungsnachricht der Benutzer-zu-Benutzer-Signalisierung, wobei die besagte Benutzerebene-Signalisierungsnachricht von der zumindest anderen Benutzerstation in einem Zeitschlitz empfangen wird, der von dem zur Verbindung zugeordneten Verkehrskanal gestohlen ist;
Extrahieren (106) eines Datenelements DI aus der Signalisierungsnachricht;
Anwenden (108) von im Datenelement enthaltenen Informationen als Betriebsinformationen über die andere Benutzerstation.

7. Verfahren nach Patentanspruch 6, **dadurch gekennzeichnet, dass** das Datenelement Standortinformationen aufweist, die den Standort des anderen Benutzers indizieren.

8. Verfahren nach Patentanspruch 6, **dadurch gekennzeichnet, dass** die Verbindung zwischen der Benutzerstation und der zumindest einen anderen Benutzerstation ein Gruppenruf ist.

9. Verfahren nach Patentanspruch 7 oder 8, **dadurch gekennzeichnet, dass** Standorte eines oder mehrerer anderer Benutzer für den Benutzer der Benutzerstation angezeigt werden.

10. Benutzerstation mit
einer Kommunikationseinheit (21), die konfiguriert ist, einen Verkehrskanal zur Verbindung zwischen der Benutzerstation und zumindest einer anderen Benutzerstation zuzuordnen;
einem Betriebsinformationselement (26), das konfiguriert ist, Betriebsinformationen über den Benutzer der Benutzerstation zu bestimmen;
einer Verarbeitungseinheit (23), die konfiguriert ist, eine Benutzerebene-Signalisierungsnachricht der Benutzer-zu-Benutzer-Signalisierung zu erstellen, wobei die besagte Benutzerebene-Signalisierungsnachricht ein Datenelement enthält, das die gewonnenen Betriebsinformationen posᵢ trägt;
wobei die Kommunikationseinheit (21) konfiguriert ist, die Signalisierungsnachricht der zumindest anderen Benutzerstation in einem Zeitschlitz zu übertragen, der von dem zur Verbindung zugeordneten Verkehrskanal gestohlen ist.

11. Benutzerstation mit
einer Kommunikationseinheit, die konfiguriert ist, einen Verkehrskanal zu einer Verbindung zwischen einer Benutzerstation und zumindest einer anderen Benutzerstation zuzuordnen und eine Benutzerebene-Signalisierungsnachricht der Benutzer-zu-Benutzer-Signalisierung zu empfangen, wobei die besagte Benutzerebene-Signalisierungsnachricht von der zumindest anderen Benutzerstation in einem Zeitschlitz empfangen wird, der von dem zur Verbindung zugeordneten Verkehrskanal gestohlen ist;
einer Verarbeitungseinheit, die konfiguriert ist, ein Datenelement DI aus der Signalisierungsnachricht zu extrahieren; und im Datenelement enthaltene Informationen als Betriebsinformationen über die andere Benutzerstation anzuwenden.

12. Benutzerstation nach Patentanspruch 10 oder 11, **dadurch gekennzeichnet, dass** die Betriebsinformationen einen oder mehrere Werte aufweisen, die ein dynamisch variierendes, mit dem Benutzer verbundenes Merkmal beschreiben.

13. Benutzerstation nach Patentanspruch 10, 11 oder 12, **dadurch gekennzeichnet, dass** die Benutzerstation eine oder mehrere Anwendungen und eine Anwendungsschicht-Dienstfunktion zur Steuerung von Assoziierungen zwischen den Anwendungen und Verbindungen der Benutzerstation aufweist.

14. Kommunikationssystem, das eine Benutzerstation nach Patentanspruch 10 und eine andere Benutzerstation nach Patentanspruch 11 aufweist.

15. Computerprogramm, das Programmcodemittel aufweist, die angepasst sind, Schritte nach einem der Patentansprüche 1 bis 9 auszuführen, wenn das Programm auf einem Computer abläuft.

## Revendications

1. Procédé comprenant :
l'attribution (91) d'un canal de trafic pour une connexion entre un terminal utilisateur et au moins un autre terminal utilisateur ;
la détermination (92) d'informations de fonctionnement sur l'utilisateur du terminal utilisateur ; **caractérisé par**
la création (93) d'un message de signalisation de plan utilisateur de signalisation d'utilisateur à utilisateur, ledit message de signalisation de plan utilisateur comprenant un élément de données portant les informations de fonctionnement dérivées ;
la transmission (95) du message de signalisation de plan utilisateur à l'au moins un autre terminal utilisateur dans un créneau temporel volé au canal de trafic attribué à la connexion.

2. Procédé selon la revendication 1, **caractérisé par** l'élément de données comprenant des informations d'emplacement indiquant l'emplacement du terminal utilisateur de l'utilisateur, ou des informations d'état de fonctionnement entrées par l'utilisateur du terminal utilisateur.

3. Procédé selon la revendication 1 ou 2, **caractérisé par** la création du message de signalisation de plan utilisateur selon un schéma prédéfini.

4. Procédé selon la revendication 1, 2 ou 3, **caractérisé par** la connexion entre le terminal utilisateur et l'au moins un autre terminal utilisateur qui est un appel de groupe.

5. Procédé selon l'une quelconque des revendications précédentes, **caractérisé par** les informations de fonctionnement comprenant une ou plusieurs valeurs décrivant une caractéristique à variation dynamique associée à l'utilisateur.

6. Procédé comprenant :
l'attribution (102) d'un canal de trafic pour une connexion entre un terminal utilisateur et au moins un autre terminal utilisateur ;
la réception (104) d'un message de signalisation de plan utilisateur de signalisation d'utilisateur à utilisateur, dans lequel ledit message de signalisation de plan utilisateur est reçu en provenance de l'au moins un autre terminal utilisateur dans un créneau temporel volé au canal de trafic attribué à la connexion ;
l'extraction (106) d'un élément de données du message de signalisation ;
l'application (108) d'informations comprises dans l'élément de données en tant qu'informations de fonctionnement sur l'autre terminal utilisateur.

7. Procédé selon la revendication 6, **caractérisé par** l'élément de données comprenant des informations d'emplacement indiquant l'emplacement de l'autre utilisateur.

8. Procédé selon la revendication 6, **caractérisé par** la connexion entre le terminal utilisateur et l'au moins un autre terminal utilisateur qui est un appel de groupe.

9. Procédé selon la revendication 7 ou 8, **caractérisé par** l'affichage d'emplacements d'un ou plusieurs autres utilisateurs pour l'utilisateur du terminal utilisateur.

10. Terminal utilisateur comprenant
une unité de communication (21) configurée pour attribuer un canal de trafic pour la connexion entre le terminal utilisateur et au moins un autre terminal utilisateur ;
un élément d'informations de fonctionnement (26) configuré pour déterminer des informations de fonctionnement sur l'utilisateur du terminal utilisateur ;
une unité de traitement (23) configurée pour créer un message de signalisation de plan utilisateur de signalisation d'utilisateur à utilisateur, ledit message de signalisation de plan utilisateur comprenant un élément de données portant les informations de fonctionnement dérivées, posᵢ ;
l'unité de communication (21) étant configurée pour transférer le message de signalisation à l'au moins un autre terminal utilisateur dans un créneau temporel volé au canal de trafic attribué à la connexion.

11. Terminal utilisateur comprenant
une unité de communication configurée pour attribuer un canal de trafic pour une connexion entre un terminal utilisateur et au moins un autre terminal utilisateur, et pour recevoir un message de signalisation de plan utilisateur de signalisation d'utilisateur à utilisateur, dans lequel ledit message de signalisation de plan utilisateur est reçu en provenance de l'au moins un autre terminal utilisateur dans un créneau temporel volé au canal de trafic attribué à la connexion ;
une unité de traitement configurée pour extraire du message de signalisation un élément de données, DI, et pour appliquer des informations comprises dans l'élément de données en tant qu'informations de fonctionnement sur l'autre terminal utilisateur.

12. Terminal utilisateur selon la revendication 10 ou 11 **caractérisé par** les informations de fonctionnement comprenant une ou plusieurs valeurs décrivant une caractéristique à variation dynamique associée à l'utilisateur.

13. Terminal utilisateur selon la revendication 10, 11 ou 12, **caractérisé par** le terminal utilisateur comprenant une ou plusieurs applications, et une fonction de service de couche d'application pour commander des associations entre les applications et des connexions du terminal utilisateur.

14. Système de communication comprenant un terminal utilisateur selon la revendication 10 et un autre terminal utilisateur selon la revendication 11.

15. Programme informatique comprenant un moyen de code de programme conçu pour réaliser les étapes selon l'une quelconque des revendications 1 à 9 quand le programme est exécuté sur un ordinateur.
